Europäisches Patentamt

European Patent Office

Office européen des brevets

(19)

(11) Numéro de publication : **0 427 602 B1**

(12)

# FASCICULE DE BREVET EUROPEEN

(45) Date de publication du fascicule du brevet :
**27.10.93 Bulletin 93/43**

(51) Int. Cl.⁵ : **B01J 2/28**, C22B 1/24

(21) Numéro de dépôt : **90403104.4**

(22) Date de dépôt : **02.11.90**

(54) **Agent liant et composition liante pour l'agglomération de matériaux finement divisés, agglomérés ainsi obtenus et procédé pour les préparer.**

(30) Priorité : **06.11.89 FR 8914527**

(43) Date de publication de la demande :
**15.05.91 Bulletin 91/20**

(45) Mention de la délivrance du brevet :
**27.10.93 Bulletin 93/43**

(84) Etats contractants désignés :
**BE DE DK FR GB IT NL SE**

(56) Documents cités :
**WO-A-81/01421
FR-A- 2 111 299
GB-A- 1 104 845
GB-A- 2 117 411
US-A- 3 850 844**

(73) Titulaire : **Roquette Frères
F-62136 Lestrem (FR)**

(72) Inventeur : **Gosset, Serge
363, Chemin du Paradis
F-62136 Lestrem (FR)**
Inventeur : **Graux, Jean-Pierre
66, Hameau de Cantraine
F-62190 Lillers (FR)**

(74) Mandataire : **Koch, Gustave et al
Cabinet PLASSERAUD 84, rue d'Amsterdam
F-75009 Paris (FR)**

EP 0 427 602 B1

Jouve, 18, rue Saint-Denis, 75001 PARIS

## Description

L'invention a pour objet un agent liant et une nouvelle composition liante utilisables pour l'agglomération de matériaux finement divisés.

Elle vise également, en tant que produit industriel nouveau, un aggloméré à base de matériau finement divisé contenant ledit agent liant ainsi qu'un procédé pour préparer ledit aggloméré.

Il est connu que de nombreuses activités sont génératrices de matériaux minéraux ou organiques finement divisés. En effet, les méthodes d'extraction modernes, de purification ou de séparation induisent la formation importante de fines, en particulier de minerais, de matériaux combustibles comme le charbon minéral, le charbon de bois, la lignite, les déchets de bois. L'utilisation de ces matériaux finement divisés est souhaitable non seulement du point de vue économique mais également du point de vue de la protection de l'environnement. Pour ces raisons mais aussi pour des raisons de facilité d'utilisation, il est donc nécessaire d'agglomérer ces fines.

D' autres industries sont productrices de poudres qu'il est intéressant de granuler afin d'en simplifier la manutention et l'utilisation. Il est par exemple souhaitable de fournir les engrais et les amendements agricoles sous forme de granulés plutôt que de particules solides finement divisées pour éviter le dégagement trop important de poussières lors de la manutention.

D'autre part, il est aussi intéressant sur le plan économique d'agglomérer des matériaux se présentant sous forme de fines afin d'en diminuer les coûts de transport.

Ces produits agglomérés doivent présenter une solidité en cohésion suffisante pour permettre leur transport et leur épandage sans formation importante de poussières. Leur résistance doit être telle que, lors de leur stockage en vrac, il n'y ait pas de formation de nouvelles fines.

Il est connu que certains matériaux s'agglomèrent, se granulent ou se compactent sans que l'on ait besoin de recourir à un liant mais, dans de nombreux cas, il est nécessaire d'utiliser un tel liant afin de pouvoir soit fabriquer des agglomérés dans des conditions satisfaisantes, soit conférer auxdits agglomérés des caractéristiques physiques répondant aux exigences de la technique.

L'utilisation d'un agent liant permet de porter la résistance mécanique des agglomérés à un niveau suffisant pour éviter les problèmes de formation de fines lors de leur transport ou de leur mise en oeuvre. De plus, lors d'un stockage en vrac, les agglomérés traités par un liant ne subissent pas de dommages notables.

Les avantages résultant de la mise en oeuvre d'un agent liant sont généralement constatés pour toutes les techniques d'agglomération connues et, entre autres, pour la pression-compaction, la pelletisation, la granulation, la nodulisation, l'extrusion et l'atomisation.

D'autre part, le procédé d'agglomération doit être tel qu'il présente un bon rendement pour un prix de revient faible. En effet, les matériaux agglomérés ont généralement une faible valeur économique et il est nécessaire de limiter au minimum les surcoûts provoqués par leur mise sous forme d'agglomérés. Les critères de qualité finale de produit, de rendement d'agglomération et surtout les considérations économiques limitent sérieusement le domaine de choix des agents liants utilisables pour une fabrication économique d'agglomérés.

De nombreux liants ont été proposés pour agglomérer divers matériaux. On peut citer à titre d'exemples, les alcools polyvinyliques et leurs dérivés, les celluloses et leurs dérivés, les lignosulfonates, les amidons et leurs dérivés, les silicates alcalins, le ciment, les argiles et plus particulièrement les bentonites, les goudrons, les brais et les bitumes et enfin les mélasses en associant celles-ci avec de la chaux.

L'utilisation de certains de ces liants n'est pas sans inconvénient sur le plan sanitaire. En raison de leur toxicité, il est difficile sinon impossible de les utiliser pour agglomérer certains matériaux. On peut citer, parmi de tels agents liants, les goudrons, brais et bitumes.

D'autres comme les lignosulfonates sont agressifs de par leur pH et leur composition vis-à-vis des moyens d'agglomération mis en oeuvre. De plus, lors de la combustion ou lors d'opérations d'étuvage nécessaires au cours des procédés, il y a dégagement de vapeurs nocives riches en acide sulfurique. Il en découle que les lignosulfonates sont une cause non négligeable de pollution atmosphérique et de corrosion.

D'autres produits comme les alcools polyvinyliques et leurs dérivés, les celluloses et leurs dérivés, les amidons et amidons modifiés par voie physique et/ou chimique, possèdent de bonnes propriétés liantes et permettent d'obtenir des agglomérés satisfaisant aux exigences de la technique d'agglomération mais ne répondent pas forcément aux exigences économiques. En effet, les doses d'utilisation nécessaires ne permettent généralement pas d'obtenir des agglomérés dans des conditions économiques satisfaisantes.

Les argiles sont des produits de prix relativement bas possédant des propriétés liantes mais leur domaine d'application est restreint. En outre, il est bien souvent nécessaire de les associer à d'autres liants. On peut citer à titre d'exemple les amylacés et dérivés.

Quant aux silicates alcalins, ils sont aussi d'un maniement délicat et leur emploi prolongé nécessite parfois des nettoyages fréquents des installations dans lesquelles ils sont utilisés. Les mélasses de sucre de betterave

2

ou de canne à sucre sont, quant à elles, d'un emploi aisé et généralement peu onéreux. Elles sont souvent employées en association avec de la chaux qui réagit avec la soude présente dans les mélasses pour produire un complexe calcium-saccharose connu sous le nom de saccharate de calcium. Ces mélasses sont disponibles en assez grandes quantités de par le monde. Mais elles trouvent actuellement, de façon avantageuse, d'autres débouchés, en particulier dans les industries de fermentation, notamment la production d'éthanol, si bien que l'on constate aujourd'hui un déficit important en mélasses limitant les possibilités d'utilisation de celles-ci dans les techniques d' agglomération. Par conséquent, aucun des liants existants ne permet, dans des conditions économiquement et écologiquement acceptables, d'obtenir des agglomérés de matériaux finement divisés présentant des caractéristiques mécaniques satisfaisant aux exigences de la technique d'agglomération.

L'invention a donc pour but de remédier aux inconvénients de l'art antérieur et de fournir un agent liant utilisable pour l'agglomération de matériaux finement divisés répondant mieux que ceux qui existent déjà à l'ensemble des exigences de la pratique.

La Société Demanderesse a eu le mérite de trouver que ce but était atteint dès lors que l'on utilisait, en tant qu'agent liant, une eau résiduaire de protéinerie de féculerie, en particulier de féculerie de pomme de terre.

L'agent liant utilisé dans l'invention est susceptible d'être obtenu de diverses manières et, en particulier, de résulter du traitement d'effluents de féculerie de pomme de terre connus de l'homme de l'art sous les termes de "eaux de végétation" ou "eaux rouges" dont le principe général d'obtention est rappelé ci-après.

Les tubercules de pomme de terre, préalablement nettoyés, sont tout d'abord broyés et/ou râpés. La bouillie ou râpure obtenue est ensuite diluée puis généralement centrifugée, par exemple sur des extracteurs de type décanteur centrifuge. On obtient ainsi une bouillie concentrée riche en fécule et en matières cellulosiques et un "overflow" riche en particulier en protéines et qui correspond auxdites eaux de végétation ou eaux rouges, lesquelles sont ensuite traitées au niveau de la protéinerie de la féculerie.

Il est en particulier connu de l'homme de l'art d'appliquer à ces eaux de végétation ou eaux rouges, un traitement de nature chimique (par exemple un acide) et/ou physique (par exemple un traitement thermique) en vue de procéder à la floculation partielle des protéines qu'elles contiennent.

On sépare ensuite, par exemple par centrifugation, les floculats de protéines des eaux de végétation ou eaux rouges, lesquelles peuvent dès lors être considérées comme étant "partiellement déprotéinées".

La floculation partielle des protéines contenues dans des eaux de végétation ou eaux rouges issues de féculerie de pomme de terre peut, par exemple, être effectuée selon l'une ou l'autre des variantes décrites dans le brevet français FR-A 2.256.727 dont la Société Demanderesse est titulaire et, en particulier, être réalisée à un pH de 4,6 à 5,2 en présence de $SO_2$ naissant et à une température de 95 à 105°C.

La matière sèche des eaux de végétation ou eaux rouges partiellement déprotéinées ainsi obtenues se situe généralement entre environ 3 et environ 5%.

A titre purement indicatif, de tels produits peuvent, comme exemplifié dans le brevet FR-A 2.256.727 susmentionné, contenir principalement, exprimés en poids sec:
- 35% de protéines (N x 6,25) ou acides aminés,
- 30% de cendres,
- 35% de composés organiques divers.

Il est également connu de l'homme de l'art d'appliquer auxdites eaux de végétation ou eaux rouges, de préférence après que celles-ci ont été partiellement déprotéinées selon l'une quelconque des techniques mises à la disposition de l'homme de l'art, un traitement de concentration aux fins d'en augmenter la matière sèche.

Ledit traitement de concentration, de préférence appliqué ultérieurement au traitement de déprotéinisation partielle, peut être effectué de manière connue en soi, par exemple par évaporation et/ou centrifugation. On pourra faire appel, comme évoqué dans le brevet FR-A 2.256.727 susmentionné, à un évaporateur à plusieurs effets permettant d'obtenir, comme indiqué dans ce document, un produit à 50% environ de matière sèche utilisable en alimentation animale ou comme milieu biologique pour des fermentations.

Il convient de rappeler à cet endroit de la présentation de l'invention que, depuis plusieurs dizaines d'années, les féculiers ont cherché, notamment pour des problèmes de pollution, à valoriser les eaux résiduaires de protéinerie de féculerie, en particulier les eaux de végétation ou eaux rouges partiellement déprotéinées et/ou concentrées.

Des voies de valorisation ont notamment été explorées dans les domaines de la fermentation et de la bactériologie industrielles, de l'alimentation animale et de la production d'alcool [J. Malcher et col., "Die Stärke", No.5 (1966), p.141-154]. Plus récemment, on a pensé à valoriser les éléments nutritifs contenus dans ces produits en utilisant ces derniers en tant que tels, c'est-à-dire sous forme liquide et non adjuvantée, comme agents fertilisants [J. Drent, "Die Stärke", 30 (1978), p. 387-392].

Il apparaît cependant que, pour des raisons diverses, aucune des susdites voies de valorisation n'a donné pleinement satisfaction à un niveau industriel et il a été proposé, par exemple, de les utiliser en tant que détergents liquides, cependant après avoir, entre autres, été totalement déprotéinés et décolorés [M. Baczkowicz et col., "Die Stärke", 37 (1985), No.7, p. 241-248].

Il reste que jusqu'à ce jour, la valorisation de tels produits issus de féculerie restait problématique, une grande partie de ceux-ci n'étant encore aucunement valorisés mais devant, en outre, pour satisfaire à des exigences de plus en plus strictes en termes de protection de l'environnement, subir un traitement supplémentaire et coûteux de destruction.

Or, comme déjà indiqué plus haut, la Société Demanderesse a eu le mérite de trouver que lesdits produits pouvaient valablement être valorisés en tant qu'agents liants utilisables pour l'agglomération de matériaux finement divisés.

L'agent liant utilisé dans l'invention est caractérisé par le fait qu'il est essentiellement constitué d'une eau résiduaire de protéinerie de féculerie, en particulier de féculerie de pomme de terre et tout particulièrement du type eaux de végétation ou eaux rouges partiellement déprotéinées, présentant un taux de matière sèche compris entre environ 30 et environ 90%, de préférence compris entre 50 et 75%.

De préférence, ledit agent liant présente un taux d'azote compris entre environ 2 et environ 9% en poids exprimé par rapport à la matière sèche; plus préférentiellement encore, ce taux est compris entre 4 et 6% en poids.

En outre, ledit agent liant présente généralement un taux de potassium compris entre environ 5 et environ 20% exprimé par rapport à la matière sèche et plus généralement entre 12 et 18% en poids.

En vue de l'agglomération de matériaux finement divisés, l'agent liant utilisé dans l'invention est mis en oeuvre en tant que tel ou au sein d'une composition liante contenant un ou plusieurs autres constituants de toute nature, y compris à caractère également liant ou aptes, par exemple, à augmenter la résistance mécanique et/ou la résistance à l'eau du produit final, à savoir l'aggloméré ou à minimiser les phénomènes d'"efflorescence" pouvant être subis par ledit aggloméré lors de son stockage.

Suivant un mode d'utilisation avantageux de la susdite composition liante, le susdit agent liant est associé, en présence ou non d'autres constituants, à un agent durcisseur, c'est-à-dire apte à en améliorer encore le pouvoir liant.

L'agent durcisseur pourra en particulier être choisi dans le groupe des agents alcalins et leurs mélanges, plus préférentiellement dans le groupe des hydroxydes et oxydes de métaux alcalins ou alcalino-terreux et leurs mélanges ou dans le groupe des sels de bases fortes ou faibles et leurs mélanges et notamment les carbonates de métaux alcalins ou alcalino-terreux et leurs mélanges.

Un agent durcisseur particulièrement efficace est constitué de chaux hydratée.

Selon un mode de réalisation avantageux de la composition liante, celle-ci contient d'environ 30 à environ 95% en poids d'agent liant conforme à l'invention et d'environ 5 à environ 70% en poids d'agent durcisseur.

Selon un autre mode de réalisation avantageux, la composition liante selon l'invention présente un rapport pondéral entre l'agent durcisseur et l'agent liant compris de préférence entre environ 5/100 et environ 40/100 et, plus préférentiellement, entre 10/100 et 30/100.

La susdite composition liante peut, en outre, contenir un ou plusieurs autres constituants de toute nature et, en particulier, un ou plusieurs agents aptes à améliorer la résistance à l'eau de l'aggloméré final.

Parmi la gamme de tels agents, l'homme de l'art pourra notamment faire appel à des ciments et/ou des agents hydrophobes organosiliciques et/ou des agents oxydants et/ou des résines thermodurcissables, en particulier les résines aminoplastes, résorcine et/ou phénol-formol, la mise en oeuvre de ciment(s) se révélant particulièrement avantageuse.

Par l'expression "matériau finement divisé" dont il a été question plus haut, on désigne plus particulièrement tout matériau, de nature minérale et/ou organique, dont la granulométrie est comprise entre 1 μm et 1 cm.

Les matériaux finement divisés utilisables pour préparer l'aggloméré conforme à l'invention peuvent notamment être choisis dans le groupe comprenant:

- les fines de minerai telles que, par exemple, les fines de minerai de fer, éventuellement préréduit, de ferromanganèse, de chrome et autres,
- les fines de roches sédimentaires telles que les fines de carbonates de métaux alcalins ou alcalino-terreux, d'argiles, de kiésérite, de sables et autres,
- les fines de matériaux combustibles telles que les fines de charbon minéral, de charbon de bois, de coke, de lignite,
- les fines de déchets végétaux, par exemple celles résultant des industries du bois telles que les sciures ou fines de bois, ou résultant des industries agro-alimentaires et autres,
- les fines d'engrais azotés et/ou potassiques et/ou phosphoriques,
- les mélanges quelconques d'au moins deux produits cités ci-avant.

L'aggloméré conforme à l'invention est caractérisé par le fait qu'il comporte, outre au moins un matériau finement divisé, des proportions efficaces d'au moins un agent liant conforme à l'invention et d'au moins un agent durcisseur.

On désigne par proportions efficaces celles qui sont suffisantes pour obtenir l'effet recherché, à savoir l'obtention d'agglomérés pouvant subir un transport et/ou une manipulation et/ou un stockage sans dommages substantiels.

De façon avantageuse, lesdits agglomérés comportent, par rapport au poids total de matériau finement divisé:

- d'environ 0,5 à environ 40% en poids d'agent liant conforme à l'invention, de préférence de 2 à 25% en poids,
- d'environ 0,025 à environ 28% en poids d'agent durcisseur, de préférence de 0,1 à 15% en poids.

Lesdits agglomérés pourront bien évidemment comporter, en outre, un ou plusieurs autres composants de toute nature, éventuellement à fonction liante ou aptes, par exemple, à augmenter la résistance mécanique et/ou la résistance à l'eau des agglomérés ou à minimiser les phénomènes d'"efflorescence" pouvant être subis par ceux-ci lors de leur stockage.

En particulier, lesdits agglomérés pourront contenir un ou plusieurs agents aptes à améliorer leur résistance à l'eau tels que décrits précédemment et notamment un ou plusieurs ciments.

Selon un mode de réalisation avantageux d'un aggloméré conforme à l'invention, ce dernier contient d'environ 0,025 à environ 28% en poids d'au moins un agent apte à en améliorer la résistance à l'eau, cet agent étant de préférence un ciment.

Le procédé conforme à l'invention pour préparer l'aggloméré conforme à l'invention est caractérisé par le fait:

- que l'on sélectionne un matériau finement divisé, un agent liant conforme à l'invention et un agent durcisseur,
- que l'on mélange le matériau finement divisé avec soit ledit agent liant, soit l'agent durcisseur, soit avec l'un et l'autre de ces produits ou leur mélange,
- que l'on soumet le mélange ainsi obtenu à un traitement d'agglomération, en présence ou non d'autres constituants.

Selon un mode de réalisation avantageux du procédé conforme à l'invention, on prépare tout d'abord une composition liante conforme à l'invention, on réalise un mélange intime du matériau finement divisé et de ladite composition et on soumet ce mélange au traitement d'agglomération, éventuellement en présence d'autres constituants.

Selon un autre mode de réalisation du susdit procédé, on soumet l'aggloméré obtenu à l'issue du traitement d'agglomération à un traitement d'étuvage dans des conditions de température généralement comprises entre environ 50°C et environ 600°C.

Par ailleurs, la technique d'agglomération mise en oeuvre dans le susdit procédé est choisie préférentiellement dans le groupe comprenant la pelletisation, la pression-compactage, la granulation, la nodulisation, l'extrusion, le moulage et l'atomisation.

Ces techniques sont en elles-mêmes connues et décrites par exemple dans le brevet EP-A 0 097 486.

En suite de quoi, on dispose désormais d'un agent liant et d'une nouvelle composition liante propres à la préparation, dans des conditions économiques très satisfaisantes, d'agglomérés à base de matériaux finement divisés présentant des caractéristiques, et notamment une résistance mécanique, au moins égales à celles des agglomérés conformes à l'art antérieur.

Il est clair que l'agent liant utilisé dans l'invention pourra être constitué essentiellement d'une eau résiduaire de protéinerie issue d'une féculerie traitant une variété quelconque, naturelle ou hybride, de pomme de terre féculière mais également d'une féculerie traitant tout autre espèce féculière telles que, par exemple, les variétés connues de manioc.

L'invention pourra être encore mieux comprise à l'aide des exemples qui suivent et qui font état de certains modes de réalisation avantageux.

## EXEMPLE 1

Dans un malaxeur de type ROBOT-COUPE, on introduit, d'une part 500 g d'un engrais comprenant 21% de phosphate tricalcique, 23% de chlorure de potassium et 56% de scories potassiques de type THOMAS, d'autre part 25 g d'eau résiduaire de protéinerie de féculerie de pomme de terre consistant en des eaux de végétation ou eaux rouges partiellement déprotéinées, présentant un taux d'azote de 5% environ exprimé sur sec, un taux de potassium de 15% environ exprimé sur sec et concentrées à une matière sèche de 55%. On malaxe le mélange pendant une minute, on y introduit alors 10 g de chaux hydratée et on poursuit ensuite le malaxage pendant deux minutes.

Le mélange est alors aggloméré par moulage sous forme de pastilles de 5 cm de diamètre et 5 mm de hauteur sous une pression 2.10⁸ Pascal.

Les éprouvettes ainsi obtenues présentent une cohésion à vert suffisante pour subir un transport.

La résistance de ces éprouvettes déterminée à l'aide d'un compressiomètre INSTRON présente les valeurs suivantes:

- A vert      200 N
- Après 24 heures de séchage à température ambiante     500 N
- Après 1/2 h de séchage à 80°C     1500 N.

Si un engrais de même composition est compacté dans les mêmes conditions en absence de tout liant, on obtient des éprouvettes présentant les résistances suivantes déterminées à l'aide d'un compressiomètre INSTRON:

- A vert      100 N
- Après 24 heures de séchage à température ambiante     200 N
- Après 1/2 h de séchage à 80°C     600 N.

Cet exemple montre que l'addition de 5% d'eau résiduaire de protéinerie de féculerie de pomme de terre concentrée à une matière sèche de 55% et de 2% de chaux hydratée en poids sec par rapport au poids d'un engrais comprenant 21% de phosphate tricalcique, 23% de chlorure de potassium et 56% de scories potassiques de type THOMAS permet d'obtenir des agglomérés satisfaisant aux exigences de la technique du point de vue de la résistance mécanique.

Dans les exemples 2 à 11 qui suivent, on utilise, en tant qu'eau résiduaire de protéinerie de féculerie de pomme de terre, des eaux de végétation ou eaux rouges partiellement déprotéinées présentant généralement un taux d'azote de l'ordre de 5-6% exprimé sur sec et un taux de potassium de l'ordre de 17-18% exprimé sur sec. La concentration de ces produits est, comme indiqué, comprise entre 55 et 70%.

## EXEMPLE 2

Dans le même malaxeur que celui utilisé pour l'exemple précédent, on introduit, d'une part 500 g d'un engrais phospho-potassique provenant de la Société SICA à Merville (Nord), ayant une granulométrie inférieure à 1 mm, d'autre part 25 g d'eau résiduaire de protéinerie de féculerie de pomme de terre concentrée à une matière sèche de 55%.

On malaxe le mélange pendant une minute, on y introduit alors 10 g de chaux hydratée et on poursuit ensuite le malaxage pendant deux minutes.

Ce mélange est alors compacté dans les mêmes conditions que celles décrites dans l'exemple 1. Les résistances des éprouvettes mesurées comme à l'exemple 1 présentent les valeurs suivantes:

- A vert      200 N
- Après 24 heures de séchage à température ambiante     400 N
- Après 1/2 de séchage à 80°C     1000 N.

Si un engrais d'une composition identique est compacté dans les mêmes conditions en absence de tout liant, on obtient des éprouvettes présentant les résistances suivantes mesurées comme à l'exemple 1:

- A vert      80 N
- Après 24 heures de séchage à température ambiante     150 N
- Après 1/2 h de séchage à 80°C     400 N.

Cet exemple montre que l'addition de 5% d'eau résiduaire de protéinerie de féculerie de pomme de terre concentrée à une matière sèche de 55% et de 2% de chaux hydratée en poids sec par rapport au poids d'un engrais phospho-potassique permet d'obtenir des agglomérés satisfaisant aux exigences de la technique du point de vue de la résistance mécanique.

## EXEMPLE 3

Dans un malaxeur de type WARING, on introduit, d'une part 250 g d'oxamide ayant une granulométrie inférieure à 200 µm, 12,5 g d'eau résiduaire de protéinerie de féculerie de pomme de terre concentrée à une matière sèche de 55% et, d'autre part 1,25 g d'un agent mouillant de type Teepol.

On malaxe le mélange pendant trois minutes, on y introduit alors 2,5 g de chaux hydratée et on poursuit le malaxage pendant encore trois minutes supplémentaires.

Le mélange est alors aggloméré dans les mêmes conditions qu'à l'exemple 1. La résistance des éprouvettes obtenues, mesurée comme à l'exemple 1, présente les valeurs suivantes:

- A vert      80 N
- Après 1 heure de séchage à température ambiante     100 N.

Il est impossible d'obtenir des agglomérés d'oxamide en absence de tout liant.

Cet exemple montre que l'addition de 5% d'eau résiduaire de protéinerie de féculerie de pomme de terre concentrée à une matière sèche de 55% et de 2% de chaux hydratée en poids sec par rapport au poids de l'oxamide permet de produire des agglomérés.

## EXEMPLE 4

Dans un malaxeur de même type que celui utilisé dans l'exemple 1, on introduit, d'une part 500 g de carbonate de calcium qualité SUPER RECALITE ayant une granulométrie inférieure à 200 μm et, d'autre part 25 g d'eau résiduaire de protéinerie de féculerie de pomme de terre concentrée à une matière sèche de 55%.

On malaxe le mélange pendant une minute, on y introduit alors 5 g de chaux hydratée puis on poursuit le malaxage pendant deux minutes.

Ce mélange est alors compacté dans les mêmes conditions que celles décrites dans l'exemple 1. La résistance des éprouvettes, mesurée comme à l'exemple 1, présente les valeurs suivantes:
- A vert        600 N
- Après 24 heures de séchage à température ambiante        800 N
- Après 1 h de séchage à 180°C        1300 N.

Si le carbonate de calcium est compacté dans les mêmes conditions en absence de tout liant, on obtient des éprouvettes présentant les résistances suivantes mesurées comme à l'exemple 1:
- A vert        100 N
- Après 24 heures de séchage à température ambiante        150 N
- Après 1 h de séchage à 180°C        250 N.

Cet exemple montre que l'addition de 5% d'eau résiduaire de protéinerie de féculerie de pomme de terre concentrée à une matière sèche de 55% et de 1% de chaux hydratée en poids sec par rapport au poids sec d'un carbonate de calcium permet d'obtenir des agglomérés satisfaisant aux exigences de la technique du point de vue de la résistance mécanique.

## EXEMPLE 5

Dans un malaxeur de type ROBOT-COUPE, on introduit, d'une part 500 g de cyanamide calcique ayant une granulométrie inférieure à 100 μm et, d'autre part 25 g d'eau résiduaire de protéinerie de féculerie de pomme de terre concentrée à une matière sèche de 55%. On malaxe le mélange pendant une minute, on y introduit alors 5 g de chaux hydratée et on poursuit ensuite le malaxage pendant deux minutes.

Le mélange est alors aggloméré suivant un mode identique à l'exemple 1 mais sous une pression $10^8$ Pascal.

Les éprouvettes ainsi obtenues présentent une bonne cohésion à vert permettant de subir un transport sans dommage.

La résistance de ces éprouvettes, mesurée comme à l'exemple 1, présente les valeurs suivantes:
- A vert        500 N
- Après 24 heures de séchage à température ambiante        1000 N
- Après 1/2 h de séchage à 80°C        3000 N.

Cet exemple montre que l'addition de 5% d'eau résiduaire de protéinerie de féculerie de pomme de terre concentrée à une matière sèche de 55% et de 1% de chaux hydratée en poids sec par rapport au poids sec de la cyanamide calcique, permet de produire des agglomérés répondant aux exigences de la technique.

Si cette même cyanamide calcique est agglomérée dans les mêmes conditions avec 5% de mélasse de canne à sucre à 70% de matière sèche et 1% de chaux hydratée, on obtient alors des éprouvettes dont la résistance mesurée comme à l'exemple 1 présente les valeurs suivantes:
- A vert        750 N
- Après 24 heures de séchage à température ambiante        1000 N
- Après 1/2 de séchage à 80°C        1200 N.

Cet exemple montre qu'à dose égale, le nouvel agent liant conforme à l'invention est plus efficace que la mélasse dont les propriétés liantes sont bien connues de l'homme de l'art pour l'agglomération de cyanamide.

## EXEMPLE 6

Dans un malaxeur de type pétrin, on introduit, d'une part 40 kg de fines de minerai de fer préréduit ayant une granulométrie comprise entre 3 et 5 mm et, d'autre part 2,4 kg d'eau résiduaire de protéinerie de féculerie de pomme de terre concentrée à une matière sèche de 70%.

On malaxe le mélange pendant 5 minutes, puis on introduit 800 g de chaux hydratée et on poursuit ensuite le malaxage pendant 5 minutes.

Le mélange est alors aggloméré par pression-compactage sur une presse de type SAHUT-CONREUR. Parmi les paramètres du traitement, on fournit la pression de réglage qui est de 16,7 $10 N^5$/m linéaire, la vitesse des zones de presse qui est de 5 tr/min et la puissance de presse qui est de 10 KW.

La presse est munie de frettes alvéolaires. Le diamètre des alvéoles est de 15,7 mm et leur profondeur est de 9,5 mm.

On obtient des agglomérés de fines de minerai de fer présentant une cohésion à vert suffisante pour subir un transport.

La résistance de ces agglomérés après une semaine de séchage à température ambiante, déterminée à l'aide d'un compressiomètre de type GEORGES FISHER, est de 300 N.

Cet exemple montre que l'addition de 6% d'eau résiduaire de protéinerie de féculerie de pomme de terre concentrée à une matière sèche de 70% et de 2% de chaux hydratée en poids sec par rapport au poids de fines de minerai de fer préréduit permet d'obtenir des agglomérés satisfaisant aux exigences de la technique du point de vue de la résistance mécanique.

Si ce même minerai est aggloméré dans les mêmes conditions avec 6% de mélasse de canne à sucre à 70% de matière sèche et 2% de chaux hydratée, on obtient alors des agglomérés dont la résistance après une semaine de séchage à température ambiante, déterminée à l'aide du même compressiomètre PERRIER, présente une valeur analogue, à savoir 300 N.

Cet exemple montre qu'à matière sèche égale, le nouvel agent liant conforme à l'invention est aussi efficace que la mélasse dont les propriétés liantes sont bien connues de l 'homme de l'art.

## EXEMPLE 7

Dans un malaxeur de type HOBART, on introduit, d'une part 2 kg de fines de minerai de fer d'une granulométrie inférieure à 800 μm et, d'autre part 160 g d'eau résiduaire de protéinerie de féculerie de pomme de terre concentrée à une matière sèche de 70%.

On malaxe le mélange pendant 5 minutes, on y introduit alors 40 g de chaux hydratée et on poursuit ensuite le malaxage pendant 5 minutes.

Le mélange est compacté sur une presse à piston équipée d'une cellule de pressage sphérique de 2 cm de rayon. Parmi les paramètres de réglage, on fournit la force qui est appliquée au piston qui est de 30000 N.

On obtient ainsi des agglomérés de fines de minerai de fer présentant une cohésion à vert suffisante pour subir un transport.

La résistance de ces agglomérés, déterminée à l'aide d'un compressiomètre PERRIER, présente les valeurs suivantes:
- A vert          370 N
- Après 4 heures de séchage à 100°C          650 N.

Cet exemple montre que l'addition de 8% d'eau résiduaire de protéinerie de féculerie de pomme de terre concentrée à une matière sèche de 70% et de 2% de chaux hydratée en poids sec par rapport au poids de fines de minerai de fer non réduit, permet d'obtenir des agglomérés satisfaisant aux exigences de la technique du point de vue de la résistance mécanique.

## EXEMPLE 8

Dans un malaxeur de type HOBART, on introduit, d'une part 1 kg de fines de charbon mineral ayant une granulométrie inférieure à 1 mm et, d'autre part 150 g d'eau résiduaire de protéinerie de féculerie de pomme de terre concentrée à une matière sèche de 60%.

On malaxe le mélange pendant 5 minutes, on y introduit alors 40 g de chaux hydratée et on poursuit le malaxage pendant 5 minutes.

Le mélange est compacté sur une presse à piston comme à l'exemple 7. La cellule de compactage est, dans le cas présent, une alvéole de 5 cm de diamètre et de 3 cm de hauteur. Parmi les paramètres de réglage, on fournit la force qui est appliquée au piston qui est de 50000 N.

On obtient ainsi des agglomérés de fines de charbon mineral présentant une cohésion à vert suffisante pour subir un transport.

La résistance de ces agglomérés, déterminée à l'aide d'un compressiomètre PERRIER, présente les valeurs suivantes:
- A vert          150 N
- Après 24 heures de séchage à température ambiante          400 N

- Après 48 heures de séchage à température ambiante  600 N
- Après 2 heures de séchage à 100°C  830 N.

Cet exemple montre que l'addition de 15% d'eau résiduaire de protéinerie de féculerie de pomme de terre concentrée à une matière sèche de 60% et de 4% de chaux hydratée en poids sec par rapport au poids de fines de charbon mineral, permet d'obtenir des agglomérés satisfaisant aux exigences de la technique du point de vue de la résistance mécanique.

## EXEMPLE 9

Dans un malaxeur de type HOBART, on introduit, d'une part 1 kg de fines de charbon mineral ayant une granulométrie inférieure à 1 mm et, d'autre part 150 g d'eau résiduaire de protéinerie de féculerie de pomme de terre concentrée à une matière sèche de 60%.

On malaxe le mélange pendant 5 minutes, on y introduit alors, d'une part 20 g de chaux hydratée et, d'autre part 20 g de ciment LAFARGE de qualité HTS. On poursuit alors le malaxage du mélange pendant 5 minutes.

Le mélange est compacté dans les mêmes conditions qu'à l'exemple 8.

On obtient ainsi des agglomérés de fines de charbon mineral présentant une cohésion à vert suffisante pour subir un transport.

La résistance de ces agglomérés, mesurée comme à l'exemple 8, présente les valeurs suivantes:
- A vert  200 N
- Après 24 heures de séchage à température ambiante  450 N
- Après 48 heures de séchage à température ambiante  700 N
- Après 2 heures de séchage à 100°C  1300 N.

Ces boulets sont ensuite immergés dans de l'eau froide. Il n'est pas observé de désagrégation même après plusieurs semaines d'immersion.

Cet exemple montre que l'addition de 15% d'eau résiduaire de protéinerie de féculerie de pomme de terre, de 2% de chaux et de 2% de ciment en poids sec par rapport au poids de fines de matériau combustible, permet d'obtenir des agglomérés satisfaisant aux exigences de la technique du point de vue de la résistance mécanique et de la tenue à l'eau.

## EXEMPLE 10

Dans un malaxeur de type HOBART, on introduit, d'une part 500 g de sciure de bois ayant une granulométrie inférieure à 3 mm et, d'autre part 125 g d'eau résiduaire de protéinerie de féculerie de pomme de terre concentrée à une matière sèche de 60%.

On malaxe le mélange pendant 5 minutes, on y introduit alors 25 g de chaux hydratée et on poursuit le malaxage pendant 5 minutes.

Le mélange est compacté sur une presse à piston comme à l'exemple 8. Parmi les paramètres de réglage, on fournit la force qui est appliquée au piston qui est de 100000 N.

On obtient ainsi des agglomérés de sciure de bois présentant une cohésion à vert suffisante pour subir un transport.

La résistance de ces boulets, mesurée comme à l'exemple 8, présente les valeurs suivantes:
- A vert  1000 N
- Après 24 heures de séchage à température ambiante  1500 N
- Après 72 heures de séchage à température ambiante  2000 N.

Cet exemple montre que l'addition de 25% d'eau résiduaire de protéinerie de féculerie de pomme de terre concentrée à une matière sèche de 60% et de 5% de chaux hydratée en poids commecial par rapport au poids de sciure de bois, permet d'obtenir des agglomérés satisfaisant aux exigences de la technique du point de vue de la résistance mécanique.

## EXEMPLE 11

Dans un malaxeur de type ROBOT-COUPE, on introduit, d'une part 500 g d'un mélange de 96,3% de sulfate naturel de magnésium hydraté et 3,7% de sulfate de sodium et, d'autre part 25 g d'eau résiduaire de protéinerie de féculerie de pomme de terre concentrée à une matière sèche de 55%. On malaxe le mélange pendant une minute, on y introduit alors 10 g d'hydroxyde de magnésium et on poursuit ensuite le malaxage pendant deux minutes.

Ce mélange est alors aggloméré comme à l'exemple 5. Les éprouvettes ainsi obtenues présentent une cohésion à vert suffisante pour subir un transport.

La résistance de ces agglomérés après 1/2 heure de séchage à 80°C, déterminée à l'aide d'un compressiomètre INSTROM , est de 850 N.

Cet exemple montre que l'addition de 5% d'eau résiduaire de protéinerie de féculerie de pomme de terre concentrée à une matière sèche de 55% et de 2% d'hydroxyde de magnésium en poids par rapport au poids d'un mélange comprenant 96,3% de sulfate naturel de magnésium hydraté et 3,7% de sulfate de sodium, permet d'obtenir des agglomérés satisfaisant aux exigences de la technique du point de vue de la résistance mécanique.

## EXEMPLE 12

Dans un mélangeur de type ROBOT-COUPE, on introduit, d'une part 250 g de tourbe ayant une humidité comprise entre 55 et 70% et, d'autre part 25 g de chaux. On malaxe le mélange pendant 5 minutes. On y introduit alors 12,5 g d'eau résiduaire de protéinerie de féculerie de pomme de terre concentrée à une matière sèche de 55% et on poursuit ensuite le malaxage pendant deux minutes.

Le mélange est alors aggloméré par moulage sous la forme de plaque carrée de 5 cm de côté et de 8 mm d'épaisseur sous une pression de $4 \times 10^7$ pascals.

Les éprouvettes ainsi obtenues présentent une cohésion à vert suffisante pour subir un transport.

La résistance de ces éprouvettes, déterminée à l'aide d'un compressiomètre INSTRON, présente les valeurs suivantes:

- A vert        17 N
- Après séchage 48 heures à l'air        100 N.

Si de la tourbe de même composition et de même humidité est compactée dans les mêmes conditions en absence de tout liant, on obtient des éprouvettes présentant les résistances suivantes:

- A vert        1,5 N
- Après séchage 48 heures à l'air        5 N.

Les plaquettes obtenues se réexpansent à la sortie de la presse.

## EXEMPLE 13

Dans un mélangeur de type ROBOT-COUPE, on introduit, d'une part 1000 g d'amendement de type calcomagnésien ayant une granulométrie inférieure à 250 μm et, d'autre part 50 g d'eau résiduaire de protéinerie de féculerie de pomme de terre concentrée à une matière sèche de 55% et 50 g d'eau potable. On malaxe le tout pendant 2 minutes, puis l'on introduit 25 g de chaux et l'on poursuit le malaxage 5 minutes. Puis l'on transvide le mélange dans une turbine à dragéifier et l'on granule le produit par addition de 50 ml d'eau potable.

Les résistances des granulés, mesurées sur un compressiomètre INSTRON, présente les valeurs suivantes:

| Ø particules | à vert | Résistance (N) séchage 48 h à l'air | séchage 130°C - 2 h |
|---|---|---|---|
| 5 mm | 5 | 20 | 12 |
| 10 mm | 10 | 35 | 20 |
| 20 mm | 12 | 65 | 33 |

Si le même amendement calco-magnésien est granulé dans les mêmes conditions en absence de tout liant, on obtient des granulés présentant les résistances suivantes:

| Ø particules | à vert | Résistance (N) | |
| | | séchage 48 h à l'air | séchage 130°C - 2 h |
|---|---|---|---|
| 5 mm | < 1 | 1 | 1 |
| 10 mm | < 1 | 1,2 | 3 |
| 20 mm | < 1 | 2 | 5 |

Cet exemple montre que l'addition de 5% d'agent liant selon l'invention et de 2,5% de chaux, en poids sec par rapport au poids d'un amendement calco-magnésien, permet d'obtenir, par granulation, des agglomérés satisfaisant aux exigences de la technique du point de vue de la résistance mécanique.

**Revendications**

1. Utilisation, à titre d'agent liant pour l'agglomération de matériaux finement divisés, d'une eau résiduaire de protéinerie de féculerie, de préférence d'une eau résiduaire de protéinerie de féculerie de pomme de terre et, encore plus préférentiellement, d'un produit du type "eaux de végétation" ou "eaux rouges" partiellement déprotéinées.

2. Utilisation selon la revendication 1, d'une eau résiduaire de protéinerie de féculerie, de préférence d'une eau résiduaire de protéinerie de féculerie de pomme de terre et, encore plus préférentiellement, d'un produit du type "eaux de végétation" ou "eaux rouges" partiellement déprotéinées présentant une matière sèche comprise entre 30 et 90%, de préférence entre 50 et 75%.

3. Utilisation selon l'une des revendications 1 et 2, d'une eau résiduaire de protéinerie de féculerie, de préférence d'une eau résiduaire de protéinerie de féculerie de pomme de terre et, encore plus préférentiellement, d'un produit du type "eaux de végétation" ou "eaux rouges" partiellement déprotéinées présentant un taux d'azote compris entre 2 et 9% en poids exprimé par rapport à la matière sèche, de préférence compris entre 4 et 6% en poids.

4. Utilisation selon l'une des revendications 1 à 3, d'une eau résiduaire de protéinerie de féculerie, de préférence d'une eau résiduaire de protéinerie de féculerie de pomme de terre et, encore plus préférentiellement, d'un produit du type "eaux de végétation" ou "eaux rouges" partiellement déprotéinées présentant un taux de potassium compris entre 5 et 20% en poids exprimé par rapport à la matière sèche, de préférence compris entre 12 et 18% en poids.

5. Composition liante pour l'agglomération de matériaux finement divisés, caractérisée par le fait qu'elle contient une eau résiduaire de protéinerie de féculerie, de préférence d'une eau résiduaire de protéinerie de féculerie de pomme de terre et, encore plus préférentiellement, d'un produit du type "eaux de végétation" ou "eaux rouges" partiellement déprotéinées et au moins un agent durcisseur.

6. Composition liante selon la revendication 6, caractérisée par le fait que l'agent durcisseur est choisi parmi les agents alcalins et leurs mélanges, de préférence dans le groupe comprenant les hydroxydes et oxydes de métaux alcalins ou alcalino-terreux et leurs mélanges, les sels de bases fortes ou faibles et leurs mélanges et notamment les carbonates de métaux alcalins ou alcalino-terreux et leurs mélanges.

7. Composition liante selon l'une des revendications 5 et 6, caractérisée par le fait qu'elle contient:
   - de 30 à 95% en poids d'une eau résiduaire de protéinerie de féculerie, de préférence d'une eau résiduaire de protéinerie de féculerie de pomme de terre et, encore plus préférentiellement, d'un produit du type "eaux de végétation" ou "eaux rouges" partiellement déprotéinées, et
   - de 5 à 70% en poids d'agent durcisseur.

8. Composition liante selon l'une des revendications 5 et 6, caractérisée par le fait que le rapport pondéral entre l'agent durcisseur et l'eau résiduaire de protéinerie de féculerie, de préférence d'une eau résiduaire de protéinerie de féculerie de pomme de terre et, encore plus préférentiellement, d'un produit du type "eaux de végétation" ou "eaux rouges" partiellement déprotéinées, est compris de préférence entre 5,2/100 et 40/100 et, plus préférentiellement, entre 10/100 et 30/100.

9. Composition liante selon l'une des revendications 5 à 8, caractérisée par le fait qu'elle contient au moins un agent apte à améliorer la résistance à l'eau d'un aggloméré, de préférence au moins un ciment.

10. Aggloméré à base d'au moins un matériau finement divisé, caractérisé par le fait qu'il comporte des proportions efficaces d'au moins un agent liant selon l'une des revendications 1 à 4 et d'au moins un agent durcisseur.

11. Aggloméré à base d'au moins un matériau finement divisé, caractérisé par le fait qu'il comporte une proportion efficace d'au moins une composition liante selon l'une des revendications 5 à 9.

12. Aggloméré selon l'une des revendications 10 et 11, caractérisé par le fait que, par rapport au poids de matériau finement divisé, il comprend:
   - de 0,5 à 40% en poids d'agent liant selon l'une quelconque des revendications 1 à 4, de préférence de 2 à 25% en poids,
   - de 0,025 à 28% en poids d'agent durcisseur, de préférence de 0,1 à 15% en poids.

13. Procédé pour la préparation d'un aggloméré à base d'un matériau finement divisé selon l'une des revendications 10 à 12, caractérisé par le fait:
   - que l'on sélectionne un matériau finement divisé, une eau résiduaire de protéinerie de féculerie, de préférence d'une eau résiduaire de protéinerie de féculerie de pomme de terre et, encore plus préférentiellement, d'un produit du type "eaux de végétation" ou "eaux rouges" partiellement déprotéinées, et un agent durcisseur,
   - que l'on mélange ces constituants,
   - que l'on soumet le mélange ainsi obtenu à un traitement d'agglomération, en présence ou non d'un ou de plusieurs autres constituants, et
   - que l'on soumet éventuellement l'aggloméré obtenu à l'issue du traitement d'agglomération à un traitement d'étuvage dans des conditions de température généralement comprises entre 50°C et 600°C.

**Patentansprüche**

1. Verwendung eines Abwassers der Protein-Stärke-Industrie, vorzugsweise eines Abwassers der Protein-Kartoffelstärke-Industrie. und besonders bevorzugt eines teilweise entproteinisierten Produktes vom Typ "Fruchtwasser" oder "Rotwasser" als Bindemittel für die Agglomeration von fein verteilten Stoffen.

2. Verwendung nach Anspruch 1 eines Abwassers der Protein-Stärke-Industrie, vorzugsweise eines Abwassers der Protein-Kartoffelstärke-Industrie, und besonders bevorzugt eines teilweise entproteinisierten Produktes vom Typ "Fruchtwasser" oder "Rotwasser". das eine Trockenmasse zwischen 30 % und 90 %. vorzugsweise zwischen 50 % und 75 % aufweist.

3. Verwendung nach einem der Ansprüche 1 und 2 eines Abwassers der Protein-Stärke-Industrie. vorzugsweise eines Abwassers der Protein-Kartoffelstärke-Industrie. und besonders bevorzugt eines teilweise entproteinisierten Produktes vom Typ "Fruchtwasser" oder "Rotwasser". das einen Stickstoffgehalt zwischen 2 Gew.-% und 9 Gew.-%, ausgedrückt im Verhältnis zur Trockenmasse, vorzugsweise zwischen 4 Gew.-% und 6 Gew.-% aufweist.

4. Verwendung nach einem der Ansprüche 1 bis 3 eines Abwassers der Protein-Stärke-Industrie, vorzugsweise eines Abwassers der Protein-Kartoffelstärke-Industrie, und besonders bevorzugt eines teilweise entproteinisierten Produktes vom Typ "Fruchtwasser" oder "Rotwasser". das einen Kaliumgehalt zwischen 5 Gew.-% und 20 Gew.-%, ausgedrückt im Verhältnis zur Trockenmasse, vorzugsweise zwischen 12 Gew.-% und 18 Gew.-%, aufweist.

5. Bindemittelzusammensetzung für die Agglomeration von fein verteilten Stoffen, dadurch gekennzeichnet, daß sie ein Abwasser der Protein-Stärke-Industrie. vorzugsweise ein Abwasser der Protein-Kartoffelstärke-Industrie, und besonders bevorzugt ein teilweise entproteinisiertes Produkt vom Typ "Fruchtwasser" oder "Rotwasser" und mindestens ein Härtungsmittel enthält.

6. Bindemittelzusammensetzung nach Anspruch 5, dadurch gekennzeichnet, daß das Härtungsmittel ausgewählt wird unter den alkalischen Mitteln und ihren Mischungen, vorzugsweise in der Gruppe, die die Hydroxide und Oxide von Alkali- oder Erdalkalimetallen und ihre Mischungen, die Salze starker oder schwacher Basen und ihre Mischungen und insbesondere die Carbonate von Alkali- oder Erdalkalimetallen und ihre Mischungen umfaßt.

7. Bindemittelzusammensetzung nach einem der Ansprüche 5 und 6, dadurch gekennzeichnet, daß sie enthält:
   - 30 Gew.-% bis 95 Gew.-% eines Abwassers der Protein-Stärke-Industrie, vorzugsweise eines Abwassers der Protein-Kartoffelstärke-Industrie, und besonders bevorzugt eines teilweise entproteinisierten Produktes vom Typ "Fruchtwasser" oder "Rotwasser", und
   - 5 Gew.-% bis 70 Gew.-% Härtungsmittel.

8. Bindemittelzusammensetzung nach einem der Ansprüche 5 und 6, dadurch gekennzeichnet, daß das Gewichtsverhältnis zwischen Härtungsmittel und dem Abwasser der Protein-Stärke-Industrie, vorzugsweise dem Abwasser der Protein-Kartoffelstärke-Industrie, und besonders bevorzugt dem teilweise entproteinisierten Produkt vom Typ "Fruchtwasser" oder "Rotwasser", vorzugsweise zwischen 5,2/100 und 40/100, und besonders bevorzugt zwischen 10/100 und 30/100 liegt.

9. Bindemittelzusammensetzung nach einem der Ansprüche 5 bis 8. dadurch gekennzeichnet, daß sie mindestens ein Mittel enthält, das geeignet ist, die Widerstandsfähigkeit eines Agglomerates gegen Wasser zu verbessern, vorzugsweise mindestens einen Zement.

10. Agglomerat oder Kunststein auf der Basis von mindestens einem fein verteilten Stoff, dadurch gekennzeichnet, daß er einen wirksamen Anteil von mindestens einem Bindemittel nach einem der Ansprüche 1 bis 4 und mindestens einem Härtungsmittel umfaßt.

11. Agglomerat oder Kunststein auf der Basis von mindestens einem fein verteilten Stoff, dadurch gekennzeichnet, daß er einen wirksamen Anteil einer Bindemittelzusammensetzung nach einem der Ansprüche 5 bis 9 umfaßt.

12. Agglomerat oder Kunststein nach einem der Ansprüche 10 and 11, dadruch gekennzeichnet, daß er im Verhältnis zum Gewicht des fein verteilten Stoffes umfaßt:
   - 0,5 Gew.-% bis 40 Gew.-% Bindemittel nach einem der Ansprüche 1 bis 4, vorzugsweise 2 Gew.-% bis 25 Gew.-%,
   - 0,025 Gew.-% bis 28 Gew.-% Härtungsmittel, vorzugsweise 0.1 Gew.-% bis 15 Gew.-%.

13. Verfahren zur Herstellung eines Agglomerates oder Kunststeines auf der Basis eines fein verteilten Stoffes nach einem der Ansprüche 10 bis 12, dadurch gekennzeichnet, daß man
   - einen fein verteilten Stoff, ein Abwasser der Protein-Stärke-Industrie, vorzugsweise ein Abwasser der Protein-Kartoffelstärke-Industrie, und besonders bevorzugt ein teilweise entproteinisiertes Produkt vom Typ "Fruchtwasser" oder "Rotwasser" und ein Härtungsmittel auswählt.
   - diese Bestandteile vermischt.
   - die auf diese Weise erhaltene Mischung einer Agglomerations-Behandlung in Anwesenheit oder nicht in Anwesenheit eines oder mehrerer anderer Bestandteile unterzieht, und
   - gegebenenfalls das am Schluß der Agglomerations-Behandlung erhaltene Agglomerat einer Behandlung im Trockenofen unterzieht, unter Temperaturbedingungen von im allgemeinen zwischen 50°C und 600°C.

## Claims

1. Use, as a binder for the agglomeration of finely divided materials, of an effluent from the protein extraction stage of starch manufacture, preferably of a protein extraction effluent from potato starch manufacture and, still more preferably, of a partially deproteinized product of the type of "vegetation liquor" or "red liquor".

2. Use according to Claim 1, of an effluent from the protein extraction stage of starch manufacture, preferably of a protein extraction effluent from potato starch manufacture and, still more preferably, of a partially deproteinized product of the type of "vegetation liquor" or "red liquor" having a dry matter content comprised between 30 and 90%, preferably between 50 and 75%.

3. Use according to one of Claims 1 and 2, of an effluent from the protein extraction stage of starch manufacture, preferably of a protein extraction effluent from potato starch manufacture and, still more preferably, of a partially deproteinized product of the type of "vegetation liquor" or "red liquor" having a nitrogen content comprised between 2% and 9% by weight expressed as dry matter content, preferably comprised between 4 and 6% by weight.

4. Use according to one of Claims 1 to 3, of an effluent from the protein extraction stage of starch manufacture, preferably of a protein extraction effluent from potato starch manufacture and, still more preferably, of a partially deproteinized product of the type of "vegetation liquor" or "red liquor" having a potassium content comprised between 5% and 20% by weight expressed as dry matter content, preferably comprised between 12 and 18% by weight.

5. Binder composition for the agglomeration of finely divided materials, characterized by the fact that it contains an effluent from the protein extraction stage of starch manufacture, preferably of a protein extraction effluent from potato starch manufacture and, still more preferably, of a partially deproteinized product of the type of "vegetation liquor" or "red liquor" and at least one hardener.

6. Binder composition according to Claim 5, characterized by the fact that the hardener is selected from alkaline agents and mixtures thereof, preferably from the group comprising hydroxides and oxides of alkali metal or alkaline earth metals and mixtures thereof, salts of strong or weak bases and mixtures thereof and in particular alkali metal or alkaline earth metal carbonates and mixtures thereof.

7. Binder composition according to one of Claims 5 and 6, characterized by the fact that it contains:
   - from 30 to 95% by weight of an effluent from the protein extraction stage of starch manufacture, preferably of a protein extraction effluent from potato starch manufacture and, still more preferably, of a partially deproteinized product of the type of "vegetation liquor" or "red liquor", and
   - from about 5 to about 70% by weight of hardener.

8. Binder composition according to one of Claims 5 and 6, characterized by the fact the ratio by weight between the hardener and the effluent from the protein extraction stage of starch manufacture, preferably of a protein extraction effluent from potato starch manufacture and, still more preferably, of a partially deproteinized product of the type of "vegetation liquor" or "red liquor" is comprised preferably between 5.2/100 and 40/100 and more preferably between 10/100 and 30/100.

9. Binder composition according to one of Claims 5 to 8, characterized by the fact that it contains at least one agent capable of improving the water resistance of an agglomerate, preferably at least one cement.

10. Agglomerate based on at least one finely divided material, characterized by the fact that it comprises effective proportions of at least one binder according to one of Claims 1 to 4 and at least one hardener.

11. Agglomerate based on at least one finely divided material, characterized by the fact that it comprises an effective proportion of at least one binder composition according to one of Claims 5 to 9.

12. Agglomerate according to one of Claims 10 and 11, characterized by the fact that it comprises, based on the weight of finely divided material:
   - from 0.5 to 40% by weight of binder according to any one of Claims 1 to 4, preferably from 2 to 25% by weight,
   - from 0.025 to 28% by weight of hardener, preferably from 0.1 to 15% by weight.

13. A process for the preparation of an agglomerate based on a finely divided material according to one of Claims 10 to 12, characterized by the fact:
   - that a finely divided material, an effluent from the protein extraction stage of starch manufacture, preferably of a protein extraction effluent from potato starch manufacture and, still more preferably, of a partially deproteinized product of the type of "vegetation liquor" or "red liquor", and a hardener are selected,

- that these constituents are mixed,
- that the mixture thus obtained is subjected to a treatment of agglomeration in the presence or absence of one or more other constituents, and
- that the agglomerate obtained from the agglomeration treatment is optionally subjected to a stoving treatment under temperature conditions generally comprised between 50°C and 600°C.